Europäisches Patentamt

European Patent Office

Office européen des brevets

(11) Veröffentlichungsnummer: **0 260 384**
**A2**

## (12) EUROPÄISCHE PATENTANMELDUNG

(21) Anmeldenummer: 87108026.3

(22) Anmeldetag: 03.06.87

(51) Int. Cl.4 **B27B 19/00**

(30) Priorität: 18.09.86 DE 3631734

(43) Veröffentlichungstag der Anmeldung:
23.03.88 Patentblatt 88/12

(84) Benannte Vertragsstaaten:
**CH DE FR GB IT LI NL SE**

(71) Anmelder: **C. & E. FEIN GmbH & Co.**
**Leuschnerstrasse 41-47**
**D-7000 Stuttgart 1(DE)**

(72) Erfinder: **Die Erfinder haben auf Ihre
Nennung verzichtet**

(54) **Schneidwerkzeug mit oszillierend antreibbarem Sägeblatt.**

(57) Es sind bereits Elektrowerkzeuge mit oszillierendem Antrieb bekannt, welche auf ihrer Abtriebswelle ein Sägeblatt aufweisen. Geräte dieser Art werden unter anderem als Handzuschneidemaschinen für Stoffe, Kunststoffplatten oder dergleichen verwendet. Vor allem bei der Verarbeitung von Kunststoff ergibt sich der Vorteil, daß keine Späne fliegen und der Kunststoff das Sägeblatt nicht zuschmiert. Sobald jedoch unter dem zu zerschneidenen Werkstoff empfindliche Materialien liegen, besteht die Gefahr, daß diese durch das Werkzeug verletzt werden. Diese Problemstellung ergibt sich vor allem beim Aufschneiden von Verpackungen. Die Aufgabe der vorliegenden Erfindung ist es, ein Schneidwerkzeug der oben beschriebenen Art zu schaffen, bei dem jede Verletzung des Untermaterials ausgeschlossen ist. Dies wird erfindungsgemäß durch einen, das Sägeblatt (4, 5) unterhalb des Arbeitsbereiches (18) abdeckenden, das zu bearbeitende Material untergreifenden Steg (7) erreicht, welcher durch einen Halter (6) mit dem Werkzeug (1) fest verbunden ist. Beim Öffnen einer Verpackung liegt der Steg (7) auf dem verpackten Gut auf und gleitet auf diesem weiter ohne es zu beschädigen.

Fig.2

## Schneidwerkzeug mit oszillierend antreibbarem Sägeblatt

Es sind bereits Elektrowerkzeuge mit oszillierendem Antrieb bekannt, welche auf ihrer Abtriebswelle ein Sägeblatt aufweisen. Geräte dieser Art werden unter anderem als Handzuschneidemaschinen für Stoffe, Kunststoffplatten od. dgl. verwendet. Vor allem bei der Verarbeitung von Kunststoff ergibt sich der Vorteil, daß keine Späne fliegen und der Kunststoff das Sägeblatt nicht zuschmiert. Sobald jedoch unter dem zu zerschneidenden Werkstoff empfindliche Materialien liegen, besteht die Gefahr, daß diese durch das Werkzeug verletzt werden. Diese Problemstellung ergibt sich vor allem beim Aufschneiden von Verpackungen. Die Aufgabe der vorliegenden Erfindung ist es, ein Schneidwerkzeug der oben beschriebenen Art zu schaffen, bei dem jede Verletzung des Untermaterials ausgeschlossen ist. Dies wird erfindungsgemäß durch einen, das Sägeblatt unterhalb des Arbeitsbereiches abdeckenden, das zu bearbeitende Material untergreifenden Steg erreicht, welcher durch einen Halter mit dem Werkzeug fest verbunden ist. Beim Öffnen einer Verpackung liegt der Steg auf dem verpackten Gut auf und gleitet auf diesem weiter ohne es zu beschädigen.

Um Verklemmungen beim Schneiden zu vermeiden, darf der den Steg tragende Halter nicht stärker als das Sägeblatt sein. Infolgedessen besteht die Gefahr, daß sich der relativ dünne Halter bei unvorsichtiger Handhabung verbiegt und der Steg sich am Sägeblatt verklemmt oder sich soweit seitlich verschiebt, daß er keinen Schutz mehr bietet. Um einen Halter mit größerer Materialstärke verwenden zu können, sind daher nach einem weiteren Merkmal der Erfindung auf derselben Antriebswelle zwei etwa gleiche Sägeblätter angeordnet, wobei für beide Sägeblätter ein gemeinsamer oder zwei Einzelstege angeordnet sind. Die Breite des Halters kann jetzt die doppelte Materialstärke des Sägeblattes zuzüglich eines etwaigen Abstandes zwischen den beiden Blättern betragen. Durch entsprechende Vergrößerung des Abstandes kann man in bestimmten Grenzen beliebige Stärken des Halters erreichen. Der dabei in Kauf zu nehmende Materialverlust durch den entstehenden Span ist ohne Bedeutung, da es sich ja nur um Verpackungsmaterial handelt, welches nicht mehr weiter verwendet wird. Besonders günstige Verhältnisse erreicht man, wenn der Halter zwischen den beiden Sägeblättern angeordnet ist.

Das bei diesem Werkzeug das Sägeblatt überdeckende Schutzgehäuse ist vorzugsweise, in Arbeitsrichtung gesehen, von vorne oben nach hinten unten zum Arbeitsbereich hin abgeschrägt, um beim Anschnitt des Materials zunächst ein Eintauchen zu ermöglichen. Erst anschließend wird dann das Werkzeug in seine eigentliche Arbeitslage geschwenkt. Zum Durchtritt des durch die beiden Sägeblätter angeschnittenen Spanes ist der Steg vorzugsweise längs geschlitzt oder aber ist bei Anwendung von zwei Stegen ein Abstand zwischen ihnen vorgesehen.

Eine vorteilhafte Weitergestaltung des Werkzeugs wird dadurch erreicht, daß am Schutzgehäuse eine Absaugeinrichtung vorgesehen ist, die zum Absaugen der Sägespäne dient.

Die Zeichungen zeigen ein Ausführungsbeispiel der Erfindung. Es stellen dar:

Fig. 1 eine Seitenansicht einer abgebrochenen Antriebsmaschine mit einem in Art einer Explosionszeichnung dargestellten Schneidwerkzeug,

Fig. 2 die Vorderansicht des Schneidwerkzeuges nach Fig. 1,

Fig. 3 einen abgebrochenen Auschnitt des zusammengesetzten Schneidwerkzeuges nach Fig. 1,

Fig. 4 eine Ansicht gemäß Fig. 2 mit Absaugeinrichtung,

Fig. 5 einen Schnitt durch die Absaugeinrichtung.

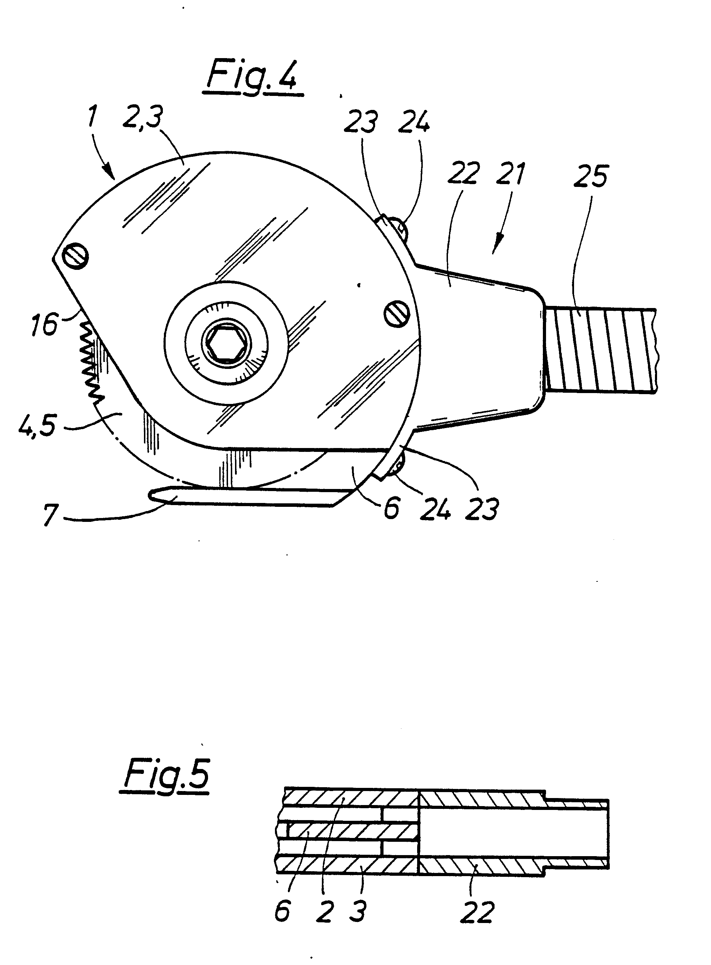

Das Schneidwerkzeug 1 besteht aus den beiden Gehäuseteilen 2 und 3, den Sägeblättern 4 und 5, dem Halter 6 mit dem Steg 7, dem Abstandhalter 8, der Scheibe 9 und der Schraube 10. Zur Befestigung des Schneidwerkzeuges 1 auf der oszillierenden Antriebsmaschine 11 werden zunächst das Gehäuseteil 2 auf den Schaft 12 und anschließend das Sägeblatt 4 auf die Antriebswelle 13 aufgeschoben. Dann erfolgt das Anlegen des Halters 6 an das Gehäuseteil 2, worauf der Abstandhalter 8 mit dem Sägeblatt 5 auf die Antriebswelle 13 aufgesetzt wird. Danach wird das Gehäuseteil 3 auf das Gehäuseteil 2 aufgelegt und mit diesem durch Schrauben 14 verbunden. Dabei wird der Halter 6 zwischen den beiden Gehäuseteilen eingeklemmt. Die Festlegung der beiden Sägeblätter 4 und 5 erfolgt durch die in die Antriebswelle 13 einschraubbare Befestigungsschraube 10 unter Zwischenschaltung der Scheibe 9. Fig. 3 zeigt die Lage des Halters 6 zwischen den beiden Sägeblättern 4 und 5, wobei die Stärke X des Halters 6 geringer sein muß als der Abstand der beiden Außenflächen Y der Sägeblätter 4 und 5 voneinander. Infolgedessen kann man einen relativ starken Halter 6 wählen.

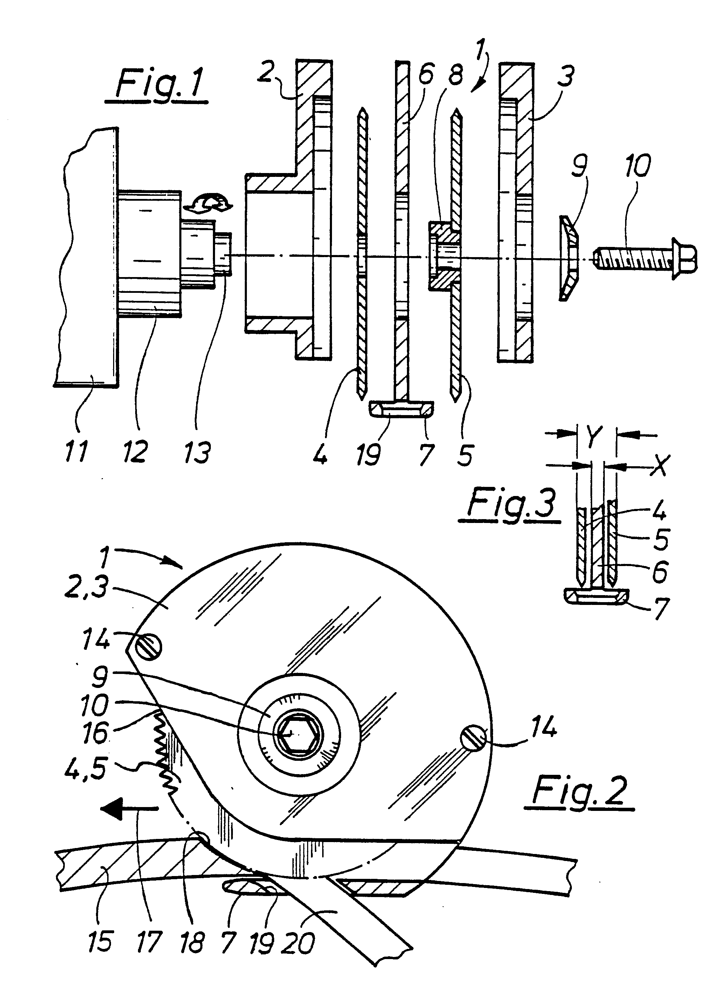

Fig. 2 zeigt das Werkzeug im Einsatz. Hier wird die Materialbahn 15 aufgetrennt. Hierzu weist das Gehäuse 2, 3 zunächst eine Abschrägung 16 auf, welche in Arbeitsrichtung 17 gesehen von vorn oben nach hinten unten verläuft, so daß man beim Anschneiden des Materials mit Hilfe der Schräge zunächst in dieses eintauchen kann. Anschließend wird das Werkzeug dann in die gezeichnete Lage gedreht. Hierbei deckt der Steg 7 die Sägeblätter 4 und 5 unterhalb des eigentlichen Arbeitsbereiches 18 ab und untergreift die Bahn 15, so daß unter dieser liegendes Gut nicht beschädigt werden kann. Der Steg 7 weist noch einen Schlitz 19 auf, durch welchen der durch die Sägeblätter 4 und 5 abgetrennte Span 20 austreten kann.

Fig. 4 und 5 zeigen ein Schneidwerkzeug 1, bei dem eine Absaugeinrichtung 21 angebracht ist. Die Absaugeinrichtung 21 besteht aus einem Stutzen 22, der mit seinen Laschen 23 mittels Schrauben 24 am Halter 6 befestigt ist. In dem Bereich, in dem der Stutzen 22 an den Gehäuseteilen anliegt, ist die Wandung der Gehäuseteile 2 und 3 durchbrochen, so daß die Späne vom Steg 7 durch die Gehäuseteile 2 und 3 und durch den Stutzen 22 hindurch, über einen Schlauch 25 von einem nicht in der Zeichung dargestellten Saugaggregat angesaugt werden.

## Ansprüche

1. Schneidwerkzeug mit oszillierend antreibbarem Sägeblatt, gekennzeichnet durch einen das Sägeblatt (4, 5) unterhalb des Arbeitsbereiches (18) abdeckenden, das zu bearbeitende Material (15) untergreifenden Steg (7), welcher durch einen Halter (6) mit dem Werkzeug (1) fest verbunden ist.

2. Werkzeug nach Anspruch 1, gekennzeichnet durch zwei etwa gleiche, auf derselben Antriebswelle (13) angeordnete Sägeblätter (4, 5) wobei für beide Sägeblätter ein gemeinsamer (7) oder zwei Einzelstege angeordnet sind.

3. Werkzeug nach Anspruch 2, dadurch gekennzeichnet, daß der Halter (6) für den oder die Stege (7) zwischen den beiden Sägeblättern (4, 5) angeordnet ist.

4. Werkzeug mit Schutzgehäuse für das Sägeblatt nach einem oder mehreren der vorhergehenden Ansprüche, dadurch gekennzeichnet, daß das Gehäuse (2, 3) in Arbeitsrichtung (17) gesehen von vorne oben nach hinten unten zum Arbeitsbereich (18) hin abgeschrägt ist.

5. Werkzeug nach einem oder mehreren der vorhergehenden Ansprüche 2 bis 4, dadurch gekennzeichnet, daß zum Durchtritt des abgeschnittenen Spanes (20) der Steg (7) längs geschlitzt (19) oder zwischen zwei Stegen ein Abstand vorgesehen ist.

6. Werkzeug nach Anspruch 1, dadurch gekennzeichnet, daß am Werkzeug (1) eine Absaugeinrichtung (21) angeordnet ist.

*Fig.1*

11  12  13  4  19  7  5  2  6  8  1  3  9  10

*Fig.3*

Y  X
4  5  6  7

*1*
*2,3*
14  9  10  16  4,5
14
*Fig.2*

15  17  18  7  19  20

0 260 384

## Fig.4

## Fig.5